# EUROPEAN PATENT APPLICATION

(11) **EP 1 884 415 A1**
(43) Date of publication of application: **06.02.2008**
(21) Application number: 07111220.5
(22) Date of filing: 28.06.2007
(51) Int. Cl.: B60R 16/037

(54) **Method and apparatus for setting user environment of car by using portable terminal**

(30) Priority: 31.07.2006 KR 20060071961
(71) Applicant: Samsung Electronics Co., Ltd., Suwon-si, Gyeonggi-Do (KR)
(72) Inventor: Jeong, Bong-Soo, Gyeonggi-do (KR)
(74) Representative: Zimmer, Franz-Josef

(57) **Abstract**

A method and apparatus for setting the user environment of a car (100,102) by using a portable terminal (102) are provided. The method includes, when user environment data are received from the car (100,102), storing the received user environment data in a storage unit of the portable terminal (102); and transmitting the stored user environment data to the car (100,102) when a user environment data transmission event occurs.

## Description

### PRIORITY

This application claims priority under 35 U.S.C. §119(a) to a Korean Patent Application filed in the Korean Intellectual Property Office on July 31, 2006 and allocated Serial No. 2006-71961, the contents of which are hereby incorporated by reference.

### BACKGROUND OF THE INVENTION

### 1. Field of the Invention

The present invention relates generally to a method and apparatus for setting the user environment of a car using a portable terminal.

### 2. Description of the Related Art

In general, most of today's cars are equipped with a variety of auxiliary devices capable of providing various functions for the convenience of a user (e.g., a driver). Examples of the auxiliary devices are an audio system, a rearview mirror, a navigation system, and an air-conditioner.

Typically, users can manually set the user environment of the auxiliary devices of the car according to their own personal inclinations. Examples of a personalized user environment include a driver's seat height, a rearview mirror angle, a radio broadcast channel, an audio volume level, a driving mode, and a navigation mode. Unfortunately, in cases where several users are allowed to drive one car, a user must frequently adjust the user environment of the car according to his/her own inclinations, when the user environment has been changed by a prior car user.

### SUMMARY OF THE INVENTION

Therefore, there is needed an apparatus and method for storing the respective users' personal data regarding the user environment of the auxiliary devices of the car and changing the user environment automatically according to the selected user environment data when the user environment data for one of the users is selected.

Such an apparatus and method would advantageously allow a car user to conveniently select his/her own user environment data so as to personally customize their own user environment. Moreover, when the users wish to drive a car that does not store his/her own user environment data, the new apparatus and method would eliminate the burden of having a user manually adjust the user environment of the new car in order to suit their own inclinations.

An aspect of the present invention is to substantially solve at least the above problems and/or disadvantages and to provide at least the advantages below. Accordingly, one aspect of the present invention is to provide to a method and apparatus for setting the user environment of a car by using a portable terminal.

Another aspect of the present invention is to provide an apparatus and method in which user environment data of a car is stored in a portable terminal to set the user environment of the car using the stored data.

According to one aspect of the present invention, there is provided a method for setting the user environment of a car by using a portable terminal. The method includes when user environment data are received from the car, storing the received user environment data in a storage unit of the portable terminal; and transmitting the stored user environment data to the car when a user environment data transmission event occurs.

According to another aspect of the present invention, there is provided a method for transmitting the user environment data of a car from the car. The method includes detecting the user environment data of auxiliary devices of the car when a user environment data transmission event occurs; and transmitting the detected user environment data to a corresponding portable terminal.

According to a further aspect of the present invention, there is provided a method for setting the user environment of a car. The method includes detecting if user environment data of a car are received from a portable terminal; and when the user environment data are received from the portable terminal, setting the user environment of corresponding auxiliary devices of the car according to the received user environment data.

According to yet another aspect of the present invention, there is provided an apparatus of a portable terminal for setting the user environment of a car. The apparatus includes a storage unit for storing the user environment data of the car; a control unit for reading the user environment data from the storage unit when a user environment data transmission event occurs; and a wireless communication unit for transmitting the read user environment data to the car.

According to yet another aspect of the present invention, there is provided an apparatus of a car for setting the user environment of the car. The method includes a user environment data detector for detecting the user environment data of auxiliary devices of the car; a wireless communication unit for transmitting the detected user environment data to a corresponding portable terminal and receiving user environment data from the portable terminal; and a user environment setting unit for setting the user environment of the auxiliary devices according to the received user environment data.

### BRIEF DESCRIPTION OF THE DRAWINGS

The above and other objects, features and advantages of the present invention will become more apparent from the following detailed description when taken in conjunction with the accompanying drawings in which:
FIG. 1 is a schematic view of a system for setting the user environment of a car by using a portable terminal according to the present invention;
FIG. 2 is a block diagram of a car according to the present invention;
FIG. 3 is a block diagram of a portable terminal according to the present invention;
FIG. 4 is a flow diagram illustrating a process for transmitting the user environment data of a car from the car to a portable terminal according to an embodiment of the present invention;
FIG. 5 is a flow diagram illustrating a process for storing the user environment data of a car in a portable terminal according to an embodiment of the present invention;
FIG. 6 is a flow diagram illustrating a process for setting the user environment of a car according to an embodiment of the present invention; and
FIG. 7 is a flow diagram illustrating a process for transmitting the user environment data of a car from a portable terminal to the car according to an embodiment of the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

The present invention is intended to provide an apparatus and method in which user environment data of a car is stored in a portable terminal and the stored data is transmitted to another car to set user environment data of the another car. The portable terminal and the car can exchange the user environment data of the car with each other using a near field wireless communication. Examples of the near field wireless communication are Bluetooth communication, Wireless LAN (WLAN) communication, Ultra Wideband (UWB) communication, Infrared Data Association (IrDA) communication, Zigbee communication, and Radio Frequency Identification (RFID) communication. The following description will be made using the Bluetooth communication among the near field wireless communications.

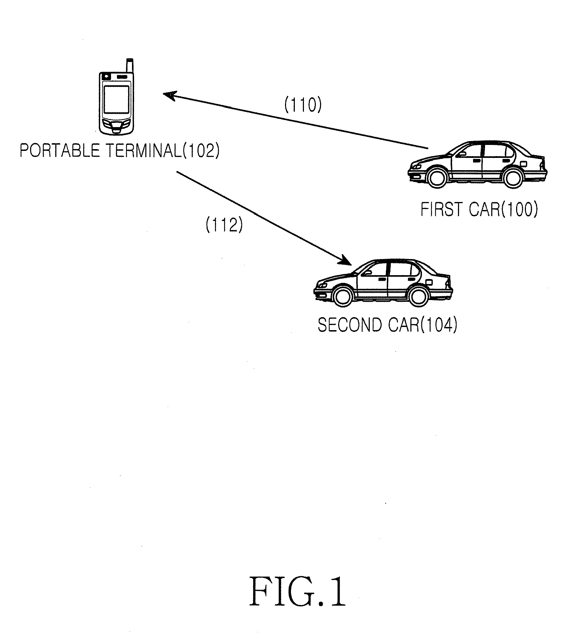

FIG. 1 is a schematic view of a system for setting the user environment of a car by using a portable terminal according to the present invention. The system includes a first car 100, a portable terminal 102, and a second car 104.

In FIG. 1, when an event for transmitting the user environment data of a car (hereinafter, referred to as a "user environment data transmission event") occurs, the first car 100 transmits environment data previously set by a user to the portable terminal 102 connected to a car kit using Bluetooth communication in step 110. Examples of the environment data may include a seat height and position, a rearview mirror angle, a radio broadcasting channel, an audio volume level, a driving mode, an air-conditioner mode, a previously set navigation pointer and display mode, a brake mode, and a pedal position.

The portable terminal 102 receives the environment data from the first car 100 and stores the received environment data. Thereafter, the portable terminal 102 detects if environment data transmission is requested from the second car 104 when the portable terminal 102 is connected to a car kit of the second car 104. In step 112, the stored environment data is transmitted to the second car 104 using the Bluetooth communication when the environment data transmission is requested.

The second car 104 receiving the environment data sets user environment of auxiliary devices of the car according to the received environment data.

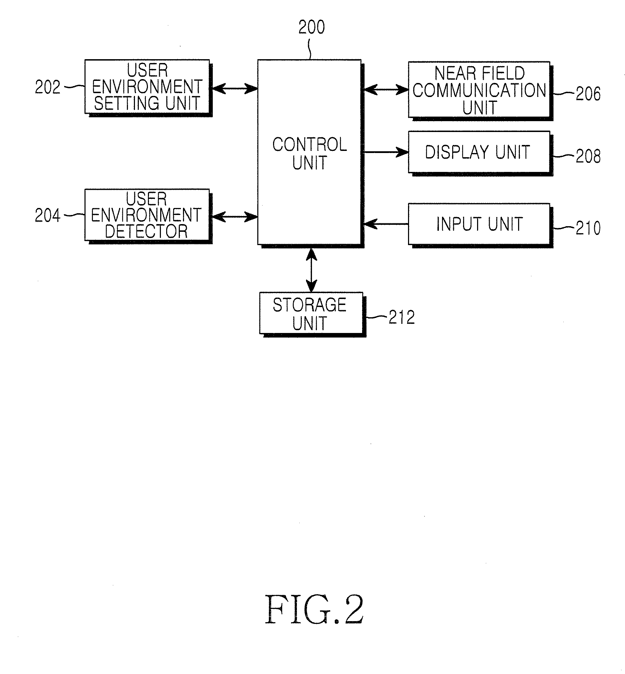

FIG. 2 is a block diagram of a car according to the present invention. The car includes a control unit 200, an environment setting unit 202, an environment setting detector 204, a near field communication unit 206, a display unit 208, an input unit 210, and a storage unit 212.

In FIG. 2, the control unit 200 controls an overall operation of the car. In operation, the control unit 200 processes and controls user environment data of a car setting and data communication between a portable terminal and the car. For example, user environment data transmission is requested to the portable terminal when the portable terminal is connected to a car kit of the car. Received user environment data of the car is outputted to the environment setting unit 202, when the user environment data is received from the portable terminal. Current user environment data is requested to the environment setting detector 204 and the user environment data is received from the environment setting detector 204 to transmit the received user environment data to the portable terminal, when a user environment data transmission event occurs.

The environment setting unit 202 sets user environment of auxiliary devices according to data received form the input unit 210. Examples of the input data may include a seat height and position, a rearview mirror angle, a radio broadcasting channel, an audio volume level, a driving mode, an air-conditioner mode, a previously set navigation pointer and display mode, a brake mode, and a pedal position. The user environment data received form the control unit 200 is analyzed to set the user environment of the auxiliary devices.

The environment setting detector 204 detects setting values of the auxiliary devices to output the detected setting values to the control unit 200, when the current user environment data is requested from the control unit 200.

The near field communication unit 206 encodes a signal input from the control unit 200 to transmit the encoded signal to the portable terminal through the near field communication, and decodes a signal input through the portable terminal to transmit the decoded signal to the control unit 200. Examples of the near field wireless communication may include Bluetooth communication, Wireless LAN (WLAN) communication, Ultra Wideband (UWB) communication, Infrared Data Association (IrDA) communication, Zigbee communication, and Radio Frequency Identification (RFID) communication.

The display unit 208 displays status data generated during operations, numerals, and characters. The input unit 210 includes a plurality of function keys to provide key input data corresponding to a key pressed by a user to the control unit 200. The storage unit 212 stores the user environment data.

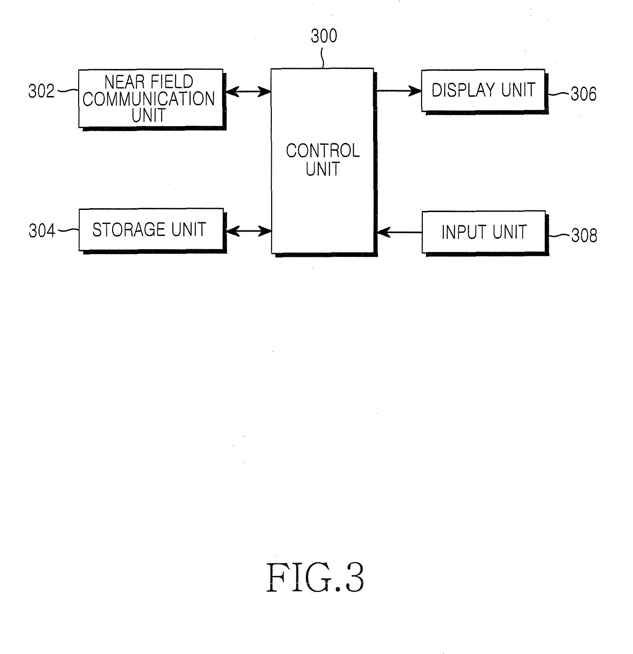

FIG. 3 is a block diagram of a portable terminal according to the present invention. The portable terminal includes a control unit 300, a near field communication unit 302, a storage unit 304, a display unit 306, and an input unit 308.

In FIG. 3, the control unit 300 processes and controls an overall operation of the portable terminal. For example, when user environment data is received form the near field communication unit 302, the received user environment data is stored in the storage unit 304. A user environment data list stored in the storage unit 304 is output to display the output list on the display unit 306. User environment data corresponding to a selected item is output to transmit the output data to the near field communication unit 302 when at least one item of the list is selected through the input unit 308.

The near field communication unit 302 encodes a signal input from the control unit 300 to transmit the encoded signal to the portable terminal through the near field communication, and decodes a signal input through the portable terminal to transmit the decoded signal to the control unit 300. Examples of the near field wireless communication may include Bluetooth communication, Wireless LAN (WLAN) communication, Ultra Wideband (UWB) communication, Infrared Data Association (IrDA) communication, Zigbee communication, and Radio Frequency Identification (RFID) communication.

The storage unit 304 stores the user environment data received form the control unit 300. The display unit 306 displays status data generated during operations, numerals, and characters. Under the control of the control unit 300, the display unit 306 displays a user environment data list. The input unit 308 includes a plurality of function keys to provide key input data corresponding to a key pressed by a user to the control unit 300. The input unit 308 provides an item selected by a user among items of the user environment data list displayed on the display unit 306.

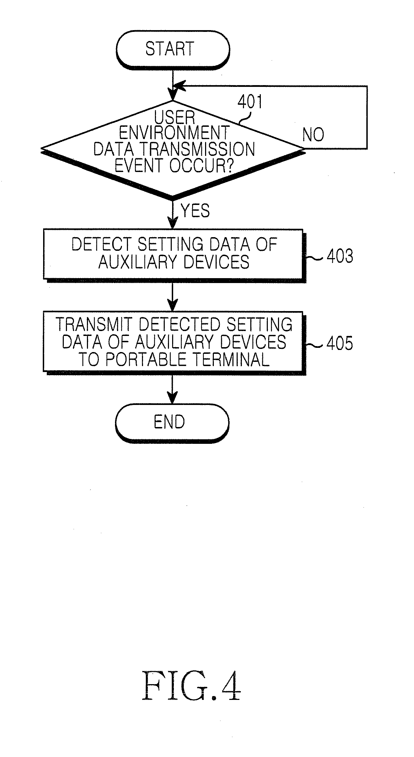

FIG. 4 is a flow diagram illustrating a process for transmitting the user environment data of a car from the car to a portable terminal according to an embodiment of the present invention.

In FIG. 4, the car detects, in step 401, if a user environment data transmission event occurs to the portable terminal connected to a car kit. In step 403, setting data of auxiliary devices is detected when the user environment data transmission event occurs. Examples of the set data may include a seat height: 3, a seat position: 2, an audio volume level: 10, an air-conditioner mode: WEAK, a navigation birdeye: ON, a navigation sound: ON, and a pedal position: HIGH.

In step 405, the car transmits the detected environment data (the setting data of auxiliary devices) to the portable terminal connected to the car kit using the Bluetooth communication. The car can transmit the environment data to the portable terminal using an Object Push Profile (OPP) among profiles applied by the Bluetooth communication. The car then ends the process.

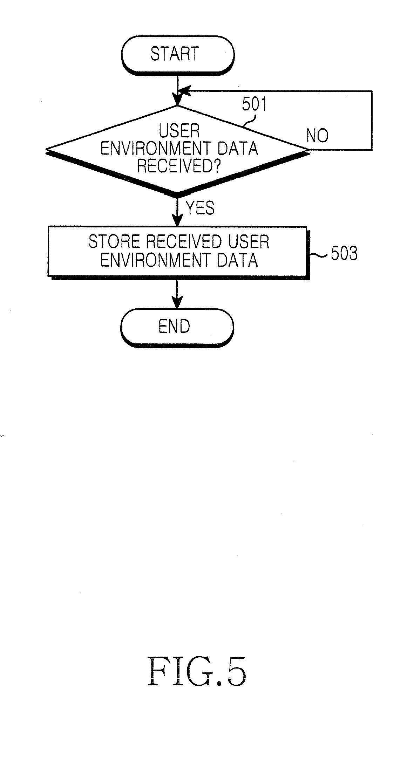

FIG. 5 is a flow diagram illustrating a process for storing the user environment data of a car in a portable terminal according to an embodiment of the present invention.

In FIG. 5, the portable terminal detects, in step 501, if the user environment data is received from a car connected to a car kit. In step 503, the portable terminal displays on the display unit 306 a message indicating that the user environment data is received and the received user environment data is stored in the storage unit 304. The portable terminal then ends the process.

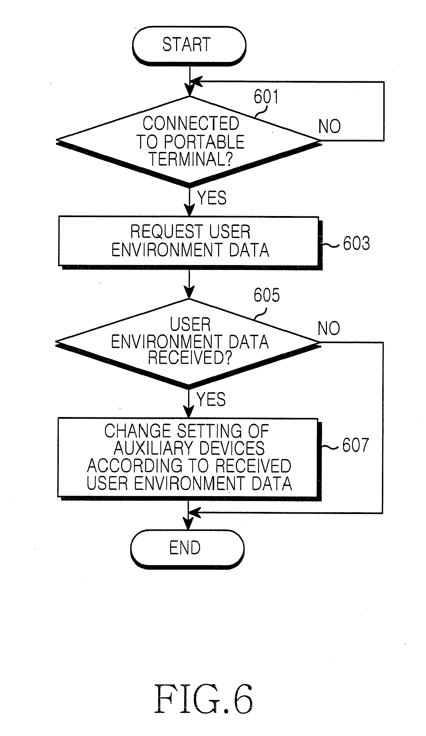

FIG. 6 is a flow diagram illustrating a process for setting the user environment of a car according to an embodiment of the present invention.

In FIG. 6, the car detects, in step 601, if the car is connected to a portable terminal through a car kit. When the car is connected to the portable terminal, the car requests user environment data transmission to the portable terminal in step 603.

In step 605, the car detects if the user environment data is received from the portable terminal. When the user environment data is received, the car analyzes the received user environment data to change setting of auxiliary device of the car, in step 607.

The user environment data received from the portable terminal is defined as a standard. Accordingly, the car analyzes only data corresponding to the auxiliary devices supported by the car, among the user environment data, to change the setting of the corresponding auxiliary devices. For example, when the received user environment data includes setting data of a seat, a rearview mirror angle, an radio broadcasting channel, an audio volume level, an air-conditioner mode, a navigation pointer and display mode, a brake mode, and a pedal position but the car does not support a navigation device, the car changes settings of only the remaining devices with disregard for navigation setting data. The portable terminal then ends the process.

Moreover, the car ends the process when the user environment data is not received, that is, a message indicating that the user environment data is not set is received due to absence of the user environment data stored in the portable terminal.

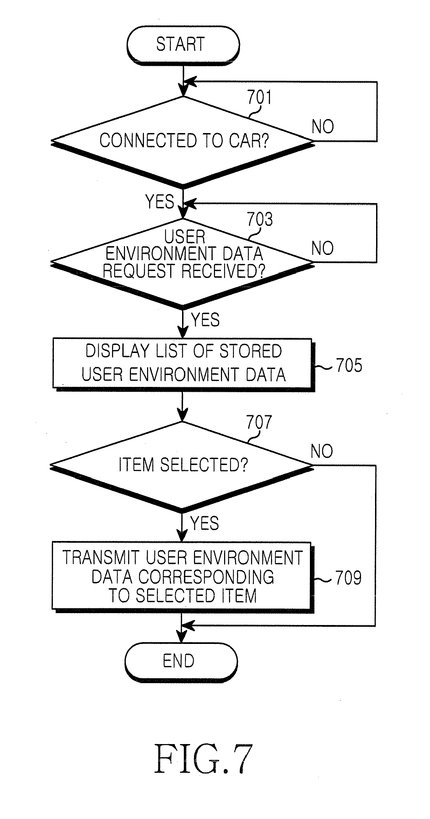

FIG. 7 is a flow diagram illustrating a process for transmitting the user environment data of a car from a portable terminal to the car according to an embodiment of the present invention.

In FIG. 7, the portable terminal detects if the portable terminal is connected to a car through a car kit. In step 703, the portable terminal detects if a user environment data transmission request message is received from the connected car.

In step 705, the portable terminal displays a user environment data list stored in the storage unit 304 on the display unit 306 when the user environment data transmission request message is received. The list including various types of user environment data displayed on the display unit 306 when the user environment data of the various types is stored in the storage unit 304 according to a season or a user's inclination. For example, a "1: daytime mode 2: nighttime mode" is displayed on the display unit 306 when driving modes of daytime and nighttime are differently stored in the storage unit 304.

In step 707, the portable terminal detects if a specific item is selected from the user environment data list displayed by a user. In step 709, the portable terminal outputs user environment data corresponding to the selected item from the storage unit 304 to transmit the outputted data to the connected car using the Bluetooth communication. The portable terminal can transmit the user environment data to the car using an OPP among profiles applied by Bluetooth communication. Thereafter, the portable terminal ends the process.

In above-described embodiments, in order to efficiently utilize the user environment data, the user environment data exchanged between the portable terminal and the car is defined as a standard so that all cars including different devices can be supported.

Also, although the user environment data transmission is requested from the car to the portable terminal, the user environment data may be transmitted to the portable terminal by a user's manipulation without a request from the car. In addition, although the user environment data is stored in the portable terminal and the stored data is transmitted to the car to set user environment of the car, the environment data may be stored and transmitted using a simple electronic chip within a memory unit in place of the portable terminal.

As described above, when users drive a car that's not their own, the users can simply adjust user environment of the other car according to their own personal inclination by storing the received user environment data in a storage unit of the portable terminal and transmitting the stored data to the car to set the use environment of auxiliary devices.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method for setting the user environment of a car (104) by using a portable terminal (102), the method comprising:
storing received user environment data from the car (104) or from a further car (100); and
transmitting the stored user environment data to the car (104).

2. The method of claim 1, wherein the user environment data includes at least one of a seat height and position, a rearview mirror angle, a radio broadcasting channel, an audio volume level, a driving mode, an air-conditioner mode, a navigation mode, a brake mode, and a pedal position.

3. The method of claim 1 or 2, wherein transmitting the stored user environment data further includes:
reading a list of the stored user environment data to display the read list on a display unit (208, 306) of the portable terminal (102); and
when at least one item is selected from the list, transmitting user environment data corresponding to the selected item to the car (104).

4. The method of any one of claims 1 to 3, wherein the car (104) and the portable terminal (102) utilize near field wireless communication.

5. The method of claim 4, wherein the near field wireless communication is one of a Bluetooth communication, a WLAN (Wireless LAN) communication, a UWB (Ultra Wideband) communication, an IrDA (Infrared Data Association) communication, a Zigbee communication, and a RFID (Radio Frequency Identification) communication.

6. A method for transmitting user environment data of a car (104) from the car (104), the method comprising:
detecting the user environment data of auxiliary devices of the car (104); and
transmitting the detected user environment data to a corresponding portable terminal (102).

7. The method of claim 6, wherein the user environment of auxiliary devices includes at least one of a seat height and position, a rearview mirror angle, a radio broadcasting channel, an audio volume level, a driving mode, an air-conditioner mode, a navigation mode, a brake mode, and a pedal position.

8. The method of claim 6 or 7, wherein the car (104) and the portable terminal (102) utilize near field wireless communication.

9. The method of claim 8, wherein the near field wireless communication is one of a Bluetooth communication, a WLAN (Wireless LAN) communication, a UWB (Ultra Wideband) communication, an IrDA (Infrared Data Association) communication, a Zigbee communication, and a RFID (Radio Frequency Identification) communication.

10. A method for setting the user environment of a car (104), the method comprising:
receiving the user environment data of the car (104) or of a further car (100) from a portable terminal (102); and
setting the user environment of corresponding auxiliary devices of the car (104) according to the received user environment data.

11. The method of claim 10, wherein the user environment data includes at least one of a seat height and position, a rearview mirror angle, a radio broadcasting channel, an audio volume level, a driving mode, an air-conditioner mode, a navigation mode, a brake mode, and a pedal position.

12. The method of claim 10 or 11, wherein the car (104) and the portable terminal (102) utilize near field wireless communication.

13. The method of claim 12, wherein the near field wireless communication is one of a Bluetooth communication, a WLAN (Wireless LAN) communication, a UWB (Ultra Wideband) communication, an IrDA (Infrared Data Association) communication, a Zigbee communication, and a RFID (Radio Frequency Identification) communication.

14. An apparatus of a portable terminal for setting the user environment of a car (104), the apparatus comprising:
a storage unit (304) for storing the user environment data of the car (104);
a control unit (300) for reading the user environment data from the storage unit (304); and
a wireless communication unit (302) for transmitting the read user environment data to the car (104).

15. The apparatus of claim 14, wherein the user environment data includes at least one of a seat height and position, a rearview mirror angle, a radio broadcasting channel, an audio volume level, a driving mode, an air-conditioner mode, a navigation mode, a brake mode, and a pedal position.

16. The apparatus of claim 14 or 15, further comprising:
a display unit (306) for displaying a user environment data list stored in the storage unit (304); and
an input unit (308) for receiving at least one item of the list to output the received item to the control unit (300).

17. The apparatus of any one of claims 14 to 16, wherein the wireless communication unit (302) utilize near field wireless communication.

18. The apparatus of claim 17, wherein the near field wireless communication is one of a Bluetooth communication, a WLAN (Wireless LAN) communication, a UWB (Ultra Wideband) communication, an IrDA (Infrared Data Association) communication, a Zigbee communication, and a RFID (Radio Frequency Identification) communication.

19. An apparatus of a car (104) for setting the user environment of the car (104), the apparatus comprising:
a user environment data detector (204) for detecting the user environment data of auxiliary devices of the car (104);
a wireless communication unit (206) for transmitting the detected user environment data to a corresponding portable terminal (102) and for receiving user environment data from the portable terminal (102); and
a user environment setting unit (202) for setting the user environment of the auxiliary devices according to the received user environment data.

20. The apparatus of claim 19, wherein the user environment and the user environment data include at least one of a seat height and position, a rearview mirror angle, a radio broadcasting channel, an audio volume level, a driving mode, an air-conditioner mode, a navigation mode, a brake mode, and a pedal position.

21. The apparatus of claim 19 or 20, wherein the car (104) and the portable terminal (102) utilize near field wireless communication.

22. The apparatus of claim 21, wherein the near field wireless communication is one of a Bluetooth communication, a WLAN (Wireless LAN) communication, a UWB (Ultra Wideband) communication, an IrDA (Infrared Data Association) communication, a Zigbee communication, and a RFID (Radio Frequency Identification) communication.
